Europäisches Patentamt

European Patent Office

Office européen des brevets

(11) Publication number: **0 078 332**
**B1**

## EUROPEAN PATENT SPECIFICATION

(45) Date of publication of patent specification: **08.01.86**

(51) Int. Cl.⁴: **B 01 D 3/12**

(21) Application number: **81109316.0**

(22) Date of filing: **30.10.81**

(54) **Continuous molecular separating distillation column.**

(43) Date of publication of application:
**11.05.83 Bulletin 83/19**

(45) Publication of the grant of the patent:
**08.01.86 Bulletin 86/02**

(84) Designated Contracting States:
**AT BE CH DE FR GB IT LI LU NL SE**

(56) References cited:
**GB-A-1 062 032**
**US-A-2 210 926**
**US-A-2 218 342**
**US-A-2 562 153**
**US-A-2 585 202**
**US-A-2 694 675**

(73) Proprietor: **Laio, Kou Toung**
**6-2 Tzu Chiang Hsin Tsuen**
**Pan Chiao Shih (TW)**

(72) Inventor: **Laio, Kou Toung**
**6-2 Tzu Chiang Hsin Tsuen**
**Pan Chiao Shih (TW)**

(74) Representative: **LOUIS, PÖHLAU, LOHRENTZ &**
**SEGETH**
**Kesslerplatz 1 P.B. 3055**
**D-8500 Nürnberg (DE)**

Courier Press, Leamington Spa, England.

## Description

This invention concerns a continuous molecular separating distillation column comprising a plurality of like unit sections in series in vertical alignment, wherein each unit section is internally provided with a rotor and a condensing means, all the rotors being rotatably mounted on a common shaft driven by a motor, each of said rotors having a circular reservoir, preferably with an arcuate bottom, and the wall of each said reservoir being provided with heating means, each of said condensing means being spaced apart from its respective rotor by a clearance in a manner such that the vaporized ingredient from said rotor can be condensed on the condensing means and discharged to the outside, and each of said unit sections is so structured that the unvaporized portion of the liquid coming from the unit section above, or from the feeding entrance, if this section is the uppermost section, can be removed by the centrifugal force of the rotor and discharged into the unit section below or to the outside, if the section is the bottommost section.

A continuous molecular separating distillation column of this type is known from US—A—2585202. The efficiency of the known distillation column is not satisfying.

It is therefore the object of the invention to enhance the efficiency of the distillation column.

The column of the above described type is characterized according to the present invention in that the rotor is W-shaped in cross section and by a reflecting means which is located on the underside of said rotor to reflect the downward radiation from said rotor.

The reflecting means not only gives back the radiation of heat to the flowing fluid film but also reduces the heat loss of the heating means from the underside by convection, so that the efficiency of the whole distillation column is enhanced.

Advantageously means to prevent the unvaporized fluid portion from flowing into the interspace between said rotors and said reflecting means are provided.

Numerous other features, objects and advantages of this invention will become more apparent from a consideration of the following description which proceeds with reference to the accompanying drawings in which:

Fig. 1 is a longitudinal sectional view of two selected layers this invention;

Fig. 2 is an overall view of an entire column;

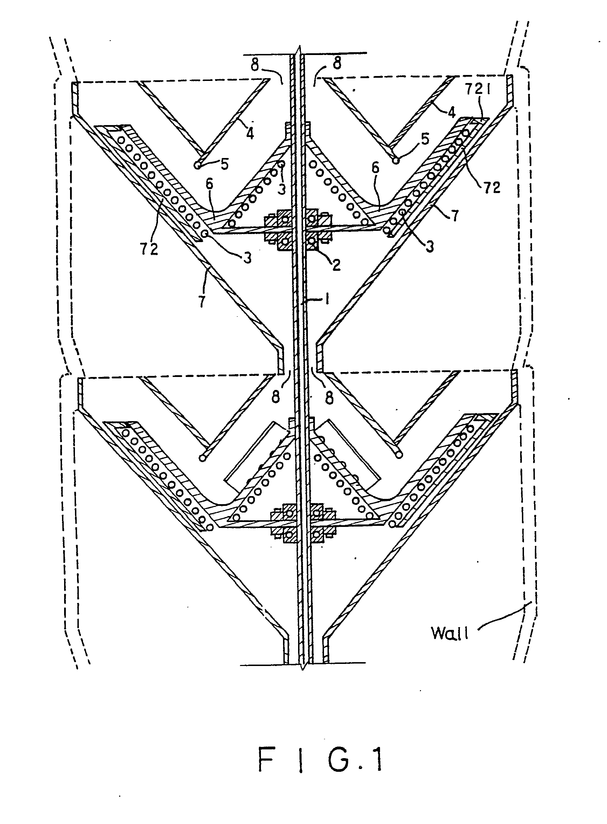

Referring now to Fig. 1, each section of the column has a funnel-shaped interior, namely gutter 7, which is centrally passed through by a rotary shaft 1. Inside gutter 7 there is further provided a rotor 6 mounted on shaft 1 through a bearing 2 for high speed rotation, which rotor 6 with its W-shaped profile has an arcuate inside bottom and is externally provided with heater 3 for heating the fluid flowing therethrough.

At a proper height from said rotor 6 there is installed condensing means 4 arranged in the form of a circular V-shaped chute and a collector 5 is provided at the bottom of said condensing means (4) to collect the distillate fraction, which then is pumped out for use.

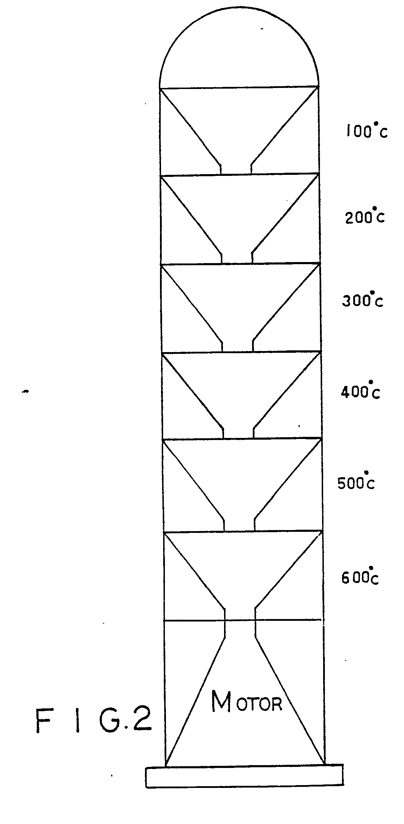

Mixture is fractioned in each section of the column at different temperatures. In an embodiment in Fig. 2, the boiling temperature is increased by 100°C from one section to the next adjacent one, for example, top section B.P. 100°C next section, B.P. 200°C ... and so forth.

The driving motor can be installed at the bottom of the whole column, or alternatively, at the top to drive all the rotors at the same time.

In operation, the mixture is fed from the entrance 8 at the top section of the column. After entering the column the fluid flows along shaft 1 to rotor 6 which is rotating at high speed and is heated by its heater (3) so that the fluid reaching preset boiling point (for example 100°C) is evaporated at once and the vapor is then condensed upon contact with the condensing means (4).

The condensate in turn flows along the condensing means (4) and is collected by collector (5). Since the clearance between condensing means 4 and rotor 6 is optimally designed by experiments and the flow is spread into a thin film due to the high speed spinning of rotor 6, the fluid is immediately evaporated leaving little residue which should be evaporated. No unfavorable physical changes can occur during the evaporation. The less volatile fluid portion, of which the boiling range is above the preset valve of this section, successfully travels through the whole radius of rotor 6 without being evaporated and is shaken away by centrifugal force to strike at the wall of the gutter (7) along which it flows downward to the next unit section and is subject to like procedure. In so doing, a mixture is separated into fractions according to their different boiling range. In order to further enhance heating efficiency, heater 3 is further externally enclosed by a reflecting foil 72 which not only gives back the radiation of heat to the flowing fluid film but also reduce the heat loss of the heaters from underside by convection. A flange 721 is provided to keep the unevaporated portion from flowing into the interspace between radiating foil 72 and heater 3.

However, the fluid, when flowing to the next unit section through its inlet port 8, is susceptible to be splashed by the quickly spinning rotor 6 if directly contact with the latter at a high level without passing a slope acting as bumper. For this reason there is further provided means lying parallel to the inner conical surface of rotor 6, which means provide, a guide for the liquid.

This invention has several advantages over the yet known distillating means. Firstly, the heater and the enlarged area of heat transfer as a result of the formation of the thin film, largely enhance the efficiency of both evaporation and condensation. Next, the multi-sectional column enables several evaporations and condensations to be carried out in a single flow path because the temperature of the fluid after leaving the top section has risen considerably high and only needs some further heating to reach the boiling range of the second section. For example, the temperature of the fluid after leaving the first column where the preset boiling point is 100°C may slightly drop to 90°C which however, can be raised to 200°C almost twice as faster as starting from normal temperature 25°C to 200°C, thus saving both the time and the power consumption. Third, because both the evaporation and condensation are carried out rapidly the products are free of the risk of undesirable physical or chemical changes which would otherwise deteriorate the products thereby ensuring the quality. For example, when applied to the refinement of edible oils, this invention can effectively prevent the destruction of vitamins. Furthermore, free of the want of numerous interconnecting pipe lines many hazards can be prevented. Also since the locating and controlling sites are of the same position, it requires less operators, thus considerably reducing the labor.

**Claims**

1. A continuous type molecular separating distillation column comprising a plurality of like unit sections in series in vertical alignment, wherein each unit section is internally provided with a rotor (6) and a condensing means (4), all the rotors (6) being rotatably mounted on a common shaft (1) driven by a motor, each of said rotors (6) having a circular reservoir, preferably with an arcuate bottom, and the wall of each said reservoir being provided with heating means (3), each of said condensing means (4) being spaced apart from its respective rotor (6) by a clearance in a manner such that the vaporized ingredient from said rotor can be condensed on the condensing means and discharged to the outside, and each of said unit sections is so structured that the unvaporized portion of the liquid coming from the unit section above, or from the feeding entrance (8), if this section is the uppermost section, can be removed by the centrifugal force of the rotor (6) and discharged into the unit section below or to the outside, if the section is the bottom-most section, characterized by the rotor being W-shaped in cross-section, and in that a reflecting means (72) is located on the underside of said rotor (6) to reflect the downward radiation from said rotor.

2. A distillation column according to claim 1, wherein means (721) to prevent the unvaporized fluid portion from flowing into the interspace between said rotor (6) and said reflecting means (72) are provided.

**Patentansprüche**

1. Kontinuierlich arbeitende molekular-trennende Destilliersäule, die eine Mehrzahl von in Reihe übereinander angeordneten Einheitssektionen umfasst, die im Inneren jeweils mit einem Rotor (6) und einem Kondensationselement (4) versehen ist, wobei alle Rotoren (6) rotierbar auf einer gemeinsamen, von einem Motor angetriebenen Welle (1) montiert sind, jeder Rotor (6) ein ringförmiges Reservoir, vorzugsweise mit bogenförmigen Boden, aufweist und die Wand jedes Reservoirs mit Heizmitteln (3) versehen ist, wobei jedes der Kondensationselemente (4) so weit in Abstand von entsprechenden Rotor (6) angeordnet ist, dass der verdampfte Inhalt aus dem Rotor auf dem Kondensationselement kondensiert und zur Aussenseite abgeführt werden kann, und wobei jede der Einheitssektionen so gestaltet ist, dass der nicht verdampfte Anteil der von der darüberliegenden Einheitssektion oder Zuführöffnung (8) — falls die Sektion die oberste Sektion ist — kommenden Flüssigkeit durch die Zentrifugalkraft des Rotors (6) abgeführt und in die darunterliegende Einheitssektion oder nach aussen — falls die jeweilige Einheitssektion die unterste Sektion ist — ausgetragen werden kann, dadurch gekennzeichnet, dass der Rotor (6) jeweils im Querschnitt W-förmig ausgebildet ist, und dass ein die nach unten gerichtete Strahlung des Rotors (6) reflektierendes Element (72) an der Unterseite des Rotors (6) angeordnet ist.

2. Destilliersäule nach Anspruch 1, dadurch gekennzeichnet, dass Mittel (721) vorgesehen sind, welche ein Eindrigen des nicht verdampften Fluidanteiles in den Zwischenraum zwischen dem Rotor (6) und dem reflektierenden Element (72) verhindern.

**Revendications**

1. Colonne de distillation moléculaire de type continu, comprenant plusieurs sections unitaires similaires disposées en série et en alignement vertical, dans laquelle chaque section unitaire comprend intérieurement un rotor (6) et un dispositif de condensation (4), tous les rotors (6) étant montés à rotation sur un arbre commun (1) entraîné par un moteur, chacun de ces rotors (6) comportant un réservoir circulaire, de préférence à fond courbe, la paroi de chaque réservoir comportant un dispositif de chauffage (3), chacun des dispositif de condensation (4) étant espacé de son rotor (6) correspondant par un jeu de manière telle que l'ingrédient vaporise depuis le rotor puisse être condensé sur le dispositif de condensation et déchargé vers l'extérieur, chacune de ces sections unitaires étant structurée de telle sorte que la portion non vaporisée du liquide sortant de la section unitaire supérieure ou venant de l'entrée d'alimentation (8), si cette section est la section supérieure, puisse être séparée par la force centrifuge du rotor (6) et déchargée dans la section unitaire inférieure ou vers l'extérieur, s'il s'agit de la section la plus basse, caractérisée en ce que le rotor est en forme de W en section transversale, et en ce qu'un dispositif réflecteur (72) est localisé sur la surface inférieure du rotor (6) pour réfléchir le rayonnement descendant venant de ce rotor.

2. Colonne de distillation suivant la revendication 1, caractérisé en ce qu'elle comprend des moyens (721) destinés à empêcher la portion de fluide non vaporisée de circuler dans l'espace existant entre le rotor (6) et le dispositif réflecteur (72).

F I G . 1

F I G.2

100°C

200°C

300°C

400°C

500°C

600°C

MOTOR